(19) Europäisches Patentamt / European Patent Office / Office européen des brevets

(11) EP 3 061 790 A1

(12) EUROPEAN PATENT APPLICATION
published in accordance with Art. 153(4) EPC

(43) Date of publication:
31.08.2016 Bulletin 2016/35

(21) Application number: 14855204.5

(22) Date of filing: 16.10.2014

(51) Int Cl.:
*C08L 67/00* (2006.01) *C08K 5/1515* (2006.01)
*C08K 5/29* (2006.01) *C08L 63/00* (2006.01)
*C08J 9/00* (2006.01)

(86) International application number:
PCT/KR2014/009721

(87) International publication number:
WO 2015/060578 (30.04.2015 Gazette 2015/17)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 25.10.2013 KR 20130128033

(71) Applicant: LOTTE Fine Chemical Co., Ltd.
Ulsan, 44714 (KR)

(72) Inventors:
- KIM, Hee Soo
Suwon-si
Gyeonggi-do 443-280 (KR)
- YEOM, Nam Yeong
Daejeon 305-509 (KR)
- CHOI, Soo Youn
Jeonju-si
Jeollabuk-do 560-896 (KR)

(74) Representative: Kador & Partner
Corneliusstraße 15
80469 München (DE)

# (54) BIODEGRADABLE POLYESTER RESIN COMPOUND AND FOAM OBTAINED FROM SAME

(57) A biodegradable polyester resin compound and a foamed article obtained by using the same are disclosed. The disclosed biodegradable polyester resin compound is obtained by melt-kneading a biodegradable polyester resin and a chain extender, which result in high melt viscosity and improved expansion ratio.

EP 3 061 790 A1

## Description

### TECHNICAL FIELD

The present invention relates to a biodegradable polyester resin compound and a foamed article obtained therefrom, and more particularly, to a biodegradable polyester resin compound having high melt viscosity and improved expansion ratio, which is obtained by melt-kneading a biodegradable polyester resin and a chain extender, and a foamed article obtained therefrom.

### BACKGROUND ART

Plastic foamed articles have advantages of light-weighted, cushioning, insulating, and molding properties, so that the plastic foamed articles have been mainly used as packaging containers or cushioning materials. Plastic foamed articles, such as polystyrene and polyolefine, have problems with slow degradation by microorganisms when reclaimed, or generation of hazardous gas or deterioration of an incinerator when incinerated.

Recently, to solve such problems above, there is a need for plastic foamed articles made of biodegradable resins that can be degraded by water or microorganisms. In particular, foamed articles made of biodegradable polyester resins receive attention. Since the biodegradable polyester resins can be degraded into water and carbon dioxide or into water and methane gas, by microorganisms present in nature, such as bacteria, algae, and fungi, the problems above can be solved in terms of environmental aspects. However, when foamed, the biodegradable resins still have a problem with a low expansion ratio.

### DETAILED DESCRIPTION OF THE INVENTION

### TECHNICAL PROBLEM

An exemplary embodiment of the present invention provides a biodegradable polyester resin compound having high melt viscosity and improved expansion ratio, which is obtained by melt-kneading a biodegradable polyester resin and a chain extender.

Another exemplary embodiment of the present invention provides a foamed article obtained by using the biodegradable polyester resin compound.

### TECHNICAL SOLUTION

According to one aspect of the present invention, provided is a biodegradable polyester resin compound obtained by melt-kneading a biodegradable polyester resin and a chain extender, wherein the chain extender includes at least one compound selected from a polyepoxide compound having two or more epoxy groups and a polyisocyanate compound having three or more isocyanate groups.

The biodegradable polyester resin may include at least one polymer selected from the group consisting of polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate terephthalate (PBSAT), and polyethylene succinate-adipate-terephthalate (PESAT).

The biodegradable polyester resin may have a number-average molecular weight Mn in a range of about 40,000 to about 50,000, a weight-average molecular weight Mw in a range of about 110,000 to about 180,000, and a Z-average molecular weight Mz in a range of about 400,000 to about 800,000.

The chain extender may have a weight-average molecular weight Mw in a range of about 1,000 to about 10,000.

The polyepoxide compound may include at least one compound selected from the group consisting of:

diepoxide including a bisphenol A-type epoxy resin, a hydrogenated bisphenol A-type epoxy resin, a brominated bisphenol A-type epoxy resin, a bisphenol F-type epoxy resin, a bisphenol S-type epoxy resin, a bixylenol-type epoxy resin, a biphenol-type epoxy group, or a combination thereof;

triepoxide including a novolac-type epoxy resin, a phenol novolac-type epoxy resin, a bixylenol-type epoxy resin, a cresol novolac-type epoxy resin, an N-glycidyl-type epoxy resin, a novolac-type epoxy resin of bisphenol A, a biphenol novolac-type epoxy resin, a chealate-type epoxy resin, a glyoxal-type epoxy resin, an amino group-containing epoxy resin, a rubber-modified epoxy resin, a dicyclopentadiene phenolic-type epoxy resin, a tetrakisphenolethane-type epoxy resin, a diglycidyl phthalate resin, a heterocyclic epoxy resin, a tetraglycidylxylenoylethane resin, a silicone-modified epoxy resin, or a ε-caprolactone-modified epoxy resin, or a combination thereof;

a poly glycidyl (meth)acrylate oligomer; and

a poly glycidyl (meth)acrylate polymer.

The polyisocyanate compound may include at least one compound selected from the group consisting of a trimer of alkylene diisocyanate, triphenylmethane triisocyanate, 1,3,5-benzene triisocyanate, 2,4,5-toluene triisocyanate, 1,3,6-hexamethylene triisocyanate, or a combination thereof.
The amount of the chain extender may be in a range of about 0.1 parts by weight to about 0.4 parts by weight based on 100 parts by weight of the biodegradable polyester resin.
The biodegradable polyester resin compound may further include at least one additive selected from the group consisting of foam nucleating agent, wax, and a thermal stabilizer.
The biodegradable polyester resin compound may have a number-average molecular weight Mn in a range of about 50,000 to about 60,000, a weigh-average molecular weight Mw in a range of about 170,000 to about 220,000, and a Z-average molecular weight Mz in a range of about 2,000,000 to about 6,000,000.
The biodegradable polyester resin compound may have melt viscosity in a range of about 8,000Pa·s to about 14,000Pa·s when measured according to Advanced Rheometric Expansion System (ARES) under conditions of a temperature of about 160°C, a strain of about 10%, and a frequency of about 0.1 Hz.
The biodegradable polyester resin compound may have storage modulus in a range of about 2,500Pa to about 5,000 Pa when measured according to ARES under conditions of a temperature of about 160°C, a strain of about 10%, and a frequency of about 0.1 Hz.
The biodegradable polyester resin compound may have melt strength in a range of about 3.0 g to about 7.0 g when measured using a melt strength meter.
The biodegradable polyester resin compound has expansion ratio in a range of about 5.0 times to about 10.0 times when performing an extrusion foaming process.
According to another aspect of the present invention, provided is a foamed article obtained by using the biodegradable polyester resin compound.

## ADVANTAGEOUS EFFECTS OF THE INVENTION

According to an exemplary embodiment of the present invention, there is provided a biodegradable polyester resin compound having high melt viscosity and improved expansion ratio, which is obtained by meld-kneading a biodegradable polyester resin and a chain extender. In addition, according to another exemplary embodiment of the present invention, there is provided a biodegradable polyester resin compound having high storage modulus and melt strength.
According to another exemplary embodiment of the present invention, there is provided a foamed article obtained by using the biodegradable polyester resin compound.

## BEST MODE

Hereinafter, a biodegradable polyester resin compound according to an exemplary embodiment of the present invention will be described in detail.
The term 'polyester' as used in the present specification refers to a synthesized polymer prepared by esterification and polycondensation between at least one di-functional carboxylic acid or at least three multi-functional carboxylic acids and at least one di-functional hydroxyl compound or at least three multi-functional hydroxyl compound.
The carboxylic acid may include, for example, at least one compound selected from the group consisting of aromatic dicarboxylic acid, such as terephthalic acid, isophthalic acid, 2,6-naphthoic acid, 1,5-naphthoic acid, and a combination thereof; and aliphatic dicarboxylic acid, such as malonic acid, succinic acid, glutaric acid, 2-methylglutaric acid, 3-methylglutaric acid, adipic acid, pimelic acid, suberic acid, azelaic acid, sebacic acid, undecanedioic acid, dodecanedioic acid, brassylic acid, tetradecanedioic acid, fumaric acid, 2,2-dimethylglutaric acid, maleic acid, itaconic acid, or a combination thereof.
The hydroxyl compound may include, for example, at least one compound selected from the group consisting of aliphatic diol, such as ethandiol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propanediol, 2,2,4-trimethyl-1,6-hexanediol, or a combination thereof.
The biodegradable polyester resin compound according to an exemplary embodiment may be obtained by meld-kneading a biodegradable polyester resin and a chain extender.
The biodegradable polyester resin and the chain extender may react to each other in the melted state after melt-kneaded, so as to produce a biodegradable polyester resin compound.
The chain extender may include at least one compound selected from a polyepoxide compound having two or more epoxy groups and a polyisocyanate compound having three or more isocyanate groups.
When a polyisocyanate compound having two isocyanate groups is used as the chain extender, low melt

viscosity and expansion ratio are resulted, thereby obtaining a biodegradable polyester resin compound that is not suitable for forming a foamed article.

The biodegradable polyester resin may include at least one polymer selected from the group consisting of polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate terephthalate (PBSAT), and polyethylene succinate-adipate-terephthalate (PESAT).

The biodegradable polyester resin may have a number-average molecular weight Mn in a range of about 40,000 to about 50,000, a weight-average molecular weight Mw in a range of about 110,000 to about 180,000, and a Z-average molecular weight Mz in a range of about 400,000 to about 800,000. When the number-average molecular weight Mn, the weight-average molecular weight Mw, and the Z-average molecular weight Mz of the biodegradable polyester resin are each within the ranges above, an amount of the chain extender used and a melting index of a final resin compound may be easily adjusted.

The biodegradable polyester resin may have, for example, melt viscosity in a range of about 5,000 Pa·s to about 7,000 Pa·s. However, the biodegradable polyester resin having melt viscosity within the range above does not have sufficiently high expansion ratio, and thus, is not suitable for forming a foamed article. However, the biodegradable polyester resin compound prepared by melt-kneading the biodegradable polyester resin and the chain extender has advantageous of biodegradability and excellent expansion ratio.

The chain extender may have a weight-average molecular weight Mw in a range of about 1,000 to about 10,000. When the weight-average molecular weight Mw of the chain extender is within the range above, -OH and -COOH groups positioned at the terminal of the biodegradable polyester resin may have excellent reactivity with the chain extender, thereby obtaining a biodegradable polyester resin compound having an improved polydispersity index (PDI).

The polyepoxide compound may include at least one compound selected from the group consisting of: diepoxide comprising a bisphenol A-type epoxy resin, a hydrogenated bisphenol A-type epoxy resin, a brominated bisphenol A-type epoxy resin, a bisphenol F-type epoxy resin, a bisphenol S-type epoxy resin, a bixylenol-type epoxy resin, a biphenol-type epoxy group, or a combination thereof;

triepoxide comprising a novolac-type epoxy resin, a phenol novolac-type epoxy resin, a bixylenol-type epoxy resin, a cresol novolac-type epoxy resin, an N-glycidyl-type epoxy resin, a novolac-type epoxy resin of bisphenol A, a biphenol novolac-type epoxy resin, a chealate-type epoxy resin, a glyoxal-type epoxy resin, an amino group-containing epoxy resin, a rubber-modified epoxy resin, a dicyclopentadiene phenolic epoxy resin, a tetrakisphenolethane-type epoxy resin, a diglycidyl phthalate resin, a heterocyclic epoxy resin, a tetraglycidyl xylenoylethane resin, a silicone-modified epoxy resin, or a $\varepsilon$-caprolactone-modified epoxy resin, or a combination thereof;

a poly glycidyl (meth)acrylate oligomer; and a poly glycidyl (meth)acrylate polymer.

The diepoxide compound may include, for example, diglycidyl ether of bisphenol A, vinyl cyclohexene dioxide, butadiene diepoxide, 4,4'-di(1,2-epoxyethyl)-diphenyl ether, 4,4'-(1,2-epoxyethyl)biphenyl, 2,2-bis(3,4-epoxycyclohexyl)propane, bis(2,3-epoxycyclopentyl) ether, or a combination thereof.

The triepoxide compound may include, for example, triglycidyl ether of p-aminophenol, 1,3,5-tri(1,2-epoxyethyl)benzene, or a combination thereof.

The polyglycidyl(meth)acrylate oligomer and the polyglycidyl(meth)acrylate polymer may include, for example, Joncryl® ADR 4368-C represented by Formula 1 below, wherein Joncryl® ADR 4368-C is manufactured by BASF and commercially available:

[Formula 1]

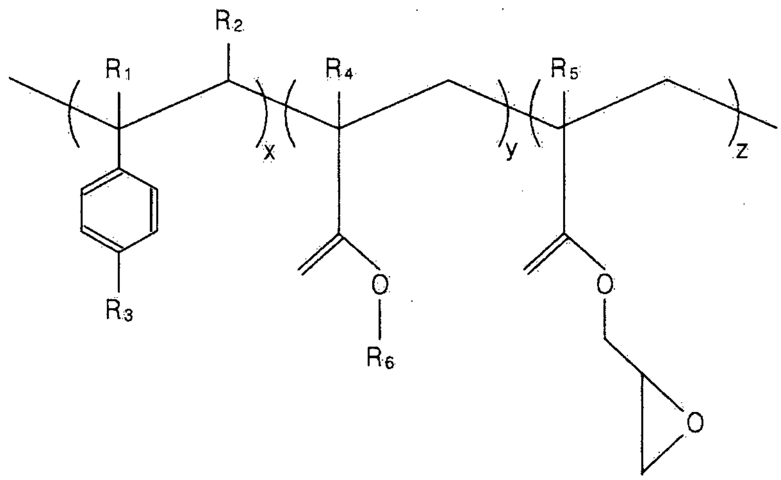

In Formula 1, $R_1$ to $R_5$ may be H, $CH_3$, a higher alkyl group, or a combination thereof, $R_6$ may be an alkyl group, and x, y, and z may each independently denote 1 to 20.

The polyisocyanate compound may include at least one compound selected from the group consisting of a trimer of alkylene diisocyanate, triphenylmethane triisocyanate, 1,3,5-benzene triisocyanate, 2,4,5-toluene triisocyanate, 1,3,6-hexamethylene triisocyanate, or a combination thereof.

The trimer of alkylene diisocyanate may include, for example, Polyisocyanate represented by Formula 2 below, wherein Polyisocyanate is prepared by Aekyung Chemical Co. Ltd. and is commercially available:

[Formula 2]

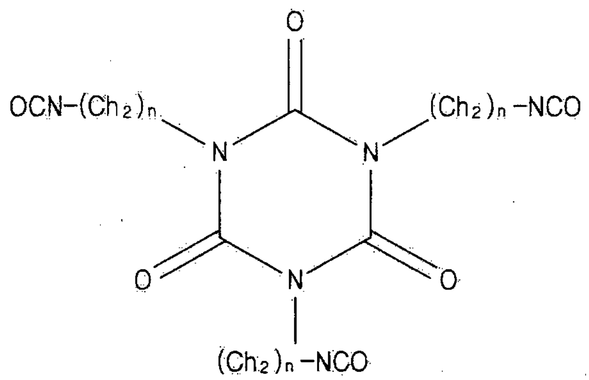

In Formula 2, n may be each independently 1 to 10, and for example, 6.

An amount of the chain extender may be in a range of about 0.1 parts by weight to about 0.4 parts by weight based on 100 parts by weight of the biodegradable polyester resin.

When the amount of the chain extender is within the range above, -OH and -COOH groups positioned at the terminal of the biodegradable polyester resin may have excellent reactivity with the chain extender, thereby obtaining a biodegradable polyester resin compound having improved melt viscosity.

The biodegradable polyester resin compound may further include at least one additive selected from a foam nucleating agent, wax, and a thermal stabilizer.

The foam nucleating agent may serve to form a foaming nucleus, and then grow a foaming cell from the foaming nucleus while the biodegradable polyester resin compound is foamed.

The term 'foaming cell' as used in the present application refers to a microstructure expanded by the foaming in the polymer.

The foam nucleating agent may include at least one compound selected from the group consisting of an inorganic foam nucleating agent, such as diatomite, sintered perlite, kaolin zeolite, clay, silica, talc, calcium carbonate, and zinc

borate; and an organic foam nucleating agent, such as charcoal, cellulose, and starch.

An amount of the foam nucleating agent is in a range of about 0.1 parts by weight to about 0.5 parts by weight based on 100 parts by weight of the biodegradable polyester resin.

When the amount of the foam nucleating agent is within the range above, the foaming cell may be formed in an appropriate size, thereby obtaining a biodegradable polyester resin compound having high expansion ratio.

The wax may serve as a flow enhancer to maintain high flowability of the biodegradable polyester resin compound.

The wax may include, for example, at least one compound selected from the group consisting of vegetable wax, such as Candelilla wax, Carnauba wax, Jojoba wax, Rice wax, and Japan wax; animal wax, such as Shellac wax and Lanolin wax; mineral wax, such as Montan wax and Ozokerite wax; and petroleum wax, such as Paraffin wax and microcrystalline wax.

An amount of the wax may be in a range of about 0.01 parts by weight to about 0.2 parts by weight based on 100 parts by weight of the biodegradable polyester resin.

When the amount of the wax is within the range above, the flowability of the biodegradable polyester resin may be improved during the melt-kneading process to manufacture the biodegradable polyester resin compound, and a biodegradable polyester resin compound having excellent mechanical characteristics may be finally obtained.

The thermal stabilizer may include an organic compound or an inorganic phosphorous compound. Examples of the organic phosphorous compound or the inorganic phosphorous compound include, for example, phosphoric acid and an organic ester thereof, and a phosphorous acid and an organic ester thereof. For example, the thermal stabilizer may include materials that are commercially available, such as phosphoric acid, alkyl phosphate, or aryl phosphate. For example, the thermal stabilizer may include triphenyl phosphate.

An amount of the thermal stabilizer may be in a range of about 0.01 parts by weight to about 0.2 parts by weight based on 100 parts by weight of the biodegradable polyester resin.

When the amount of the thermal stabilizer is within the range above, the thermal degradation of the biodegradable polyester resin does not occur during the melt-kneading process to manufacture the biodegradable polyester resin compound, and a biodegradable polyester resin compound having excellent mechanical characteristics may be finally obtained.

The biodegradable polyester resin compound may have a number-average molecular weight Mn in a range of about 50,000 to about 60,000, a weight-average molecular weight Mw in a range of about 170,000 to about 220,000, and a Z-average molecular weight Mz in a range of about 2,000,000 to about 6,000,000.

When the number-average molecular weight Mn, the weight-average molecular weight Mw, and the Z-average molecular weight Mz of the biodegradable polyester resin compound are each within the ranges above, the foaming cell may be easily formed and a biodegradable polyester resin compound having high melt viscosity and improved expansion ratio may be obtained.

When measured based on ASTM D1238 under conditions of a temperature of about 190°C and a load of about 2.16 kg, the biodegradable polyester resin compound may have a melt index MI in a range of about 1 g/10 min to about 3 g/10 min. When the melt index MI of the biodegradable polyester resin compound is within the range above, the foaming cell may be easily formed, and the formed foaming cell may not be easily destructed.

When measured based on GPC, the biodegradable polyester resin compound may have a PDI in a range of about 3 to about 4.5. When the PDI of the biodegradable polyester resin compound is within the range above, the foaming cell may be obtained in a uniform size, and the biodegradable polyester resin compound may have improved processibility and expansion ratio.

When measured based on Advanced Rheometric Expansion System (ARES) under conditions of a temperature of about 160°C, a strain of about 10%, and a frequency of about 0.1 Hz , the biodegradable polyester resin compound may have melt viscosity in a range of about 8,000 Pa·s to about 14,000 Pa·s. When the melt viscosity of the biodegradable polyester resin compound is within the range above, the foaming cell may be easily formed, and the formed foaming cell may not be easily destructed.

When measured based on ARES under conditions of a temperature of 160°C, a strain of about 10%, and a frequency of about 0.1 Hz , the biodegradable polyester resin compound may have storage modulus in a range of about 2,500 Pa to about 5,000Pa. When the storage modulus of the biodegradable polyester resin compound is within the range above, the foaming cell may be easily formed, and the biodegradable polyester resin compound may have high melt viscosity and improved expansion ratio.

When measured by using a melt strength meter, the biodegradable polyester resin compound may have melt strength in a range of about 3.0 g to about 7.0 g. When the melt strength of the biodegradable polyester resin compound is within the range above, the foaming cell may be easily formed, and the biodegradable polyester resin compound having improved expansion ratio may be obtained.

The biodegradable polyester resin compound may have expansion ratio in a range of about 5.0 times (i.e, quintuple) to about 10.0 times (i.e., decuple) when performing an extrusion foaming process.

The term 'expansion ratio' as used in the present specification refers to a ratio of bulk density of the biodegradable polyester resin compound at a state before the foaming to bulk density of the biodegradable polyester resin compound at a state after the foaming, when the foaming process is performed on the biodegradable polyester resin compound.

According to another exemplary embodiment, there is provided a foamed article obtained by using the biodegradable polyester resin compound. The foamed article may be obtained by foaming and optionally molding the biodegradable polyester resin compound. The foamed article obtained by using the biodegradable polyester resin compound may be applied to, for example, a foaming sheet, a molding container, and a packaging material.

Hereinafter, the present invention will be described in detail in connection with the following examples below, but is not limited thereto.

MODE OF THE INVENTION

Examples 1 and 2 and Comparative Examples 1 and 2

(Preparation of a composition for forming a biodegradable polyester resin)

PBAT (MI: 4.5, Mn/Mw/Mz: 53,000/148,000/400,000, PDI: 2.76, PBG 7070 manufactured by S-enpol), wax (Mw: 593.03, L-C 140P manufactured by LionComTech), triphenylphosphate (TPP) (Mw: 326.30, manufactured by Daihachi), talc (Kcs-25 manufactured by Koch. Co), Joncryl (Mw: 6,800, epoxy equivalent: 285 g/eq., ADR 4368-C manufactured by BASF), Polyisocyanate (Mw: 7,500, NCO amount: 21.25 weight%, H-5 manufactured by Aekyung Chemical Co., Ltd.), and di-isocyanate (manufactured by Asahi) were mixed at a ratio shown in Table 1 below, thereby preparing a composition for forming a biodegradable polyester resin.

[Table 1]

| | Example 1 | Example 2 | Comparative Example 1 | Comparative Example 2 |
|---|---|---|---|---|
| PBAT base chip | 100 parts by weight (150,000 g) | 100 parts by weight (150,000 g) | 100 parts by weight (150,000 g) | 100 parts by weight (150,000 g) |
| Wax | 0.05 parts by weight (75 g) | 0.05 parts by weight (75 g) | 0.05 parts by weight (75 g) | 0.05 parts by weight (75 g) |
| TPP | 0.05 parts by weight (75 g) | 0.05 parts by weight (75 g) | 0.05 parts by weight (75 g) | 0.05 parts by weight (75 g) |
| Talc | 0.3 parts by weight (450 g) | 0.3 parts by weight (450 g) | 0.3 parts by weight (450 g) | 0.3 parts by weight (450 g) |
| Joncryl | 0.25 parts by weight (375 g) | 0 parts by weight (0 g) | 0 parts by weight (0 g) | 0 parts by weight (0 g) |
| Poly-isocyanate | 0 parts by weight (0 g) | 0.2 parts by weight (300 g) | 0 parts by weight (0 g) | 0 parts by weight (0 g) |
| di-isocyanate | 0 parts by weight (0 g) | 0 parts by weight (0 g) | 0 parts by weight (0 g) | 0.05 parts by weight (75 g) |

(Preparation of a biodegradable polyester resin compound)

A twin-screw extruder (L/D: 36:1, diameter: 24.2 Φ, CHS 25-36-2V-1S manufactured by Changsung P&R) was used to melt-knead the composition for forming the biodegradable polyester resin at a barrel temperature of about 170 °C and at a speed of about 180 rpm, thereby preparing a biodegradable polyester resin compound.

(Extrusion foaming of the biodegradable polyester resin compound)

Each of the biodegradable polyester resin compounds was fed to a hopper of an extrusion foaming device (PolyLab OS-Foaming Extruder manufactured by Haake), and then, 1 ml/min of $CO_2$ gas was injected thereto via a $CO_2$ inlet. Here, a pressure of the $CO_2$ gas was about 7,000 psi. The biodegradable polyester resin compound and the $CO_2$ gas were further mixed in a static mixer Die-1 (at a temperature of about 110°C), and then, a PBAT resin that was extrusion foamed was discharged from Die-2 (at a temperature of about 102°C). Here, a screw had a rotating speed of about 40 rpm, and a barrel of the extrusion foaming device included 4 regions as follows: an inlet, a section between

the inlet and the $CO_2$ inlet, the $CO_2$ inlet, and a section between the $CO_2$ inlet and the Die-1. At each of the regions, temperatures were about 120 °C, 150 °C, 160 °C, and 160°C, respectively.

Evaluation Example

<Measurement of a melting index MI>

MIs of the biodegradable polyester resin compounds of Examples 1 and 2 and Comparative Examples 1 and 2 were measured by measuring amounts (g) of the biodegradable polyester resin compounds flowing through an orifice (inner diameter : 2.095 mm and length: 9.555 mm) based on ASTM D1238 under conditions of a temperature of about 190 °C and a load of 2.16 kg. The measurement results are shown in Table 2 below.

<Measurement of a molecular weight and a polydispersity index (PDI)>

A number-average molecular weight Mn, a weight-average molecular weight Mw, a Z-average molecular weight Mz and a PDI of the biodegradable polyester resin compounds of Examples 1 and 2 and Comparative Examples 1 and 2 were measured according to gel-permeation chromatography (GPC) using a solution of each of the biodegradable polyester resin compounds diluted in chloroform at a concentration of 1 wt%. The measurement results are shown in Table 2 below. Here, a temperature and a flow rate at which the measurements were made were about 35 °C and about 1 ml/min, respectively.

<Measurement of storage modulus and melt viscosity>

Storage modulus (G') and melt viscosity ($\eta^*$) of the biodegradable polyester resin compounds of Examples 1 and 2 and Comparative Examples 1 and 2 were measured based on ARES (ARES-G2 manufactured by TA Instrument) under conditions of a temperature of about 160°C, a strain of about 10%, and a frequency of about 0.1 Hz . The measurement results are shown in Table 2 below.

<Measurement of melt strength>

Melt strength of the biodegradable polyester resin compounds of Examples 1 and 2 and Comparative Examples 1 and 2 was measured by using a melt strength meter (Rheotens manufactured by Goettfert Inc.). The measurement results are shown in Table 2 below.

<Measurement of expansion ratio>

The bulk density of the extrusion foamed biodegradable polyester resin compounds of Examples 1 and 2 and Comparative Examples 1 and 2 at a state before the foaming and the bulk density of the extrusion foamed biodegradable polyester resin compounds of Examples 1 and 2 and Comparative Examples 1 and 2 at a state after the foaming were calculated, and according to Equation 1 below, the expansion ratio of each of the biodegradable polyester resin compounds was calculated. The calculated results are shown in Table 2 below.

[Equation 1]

Expansion ratio (times) = Bulk density of a biodegradable polyester resin compound at a state before the foaming / bulk density of a biodegradable polyester resin compound at a state after the foaming

[Table 2]

| | MI (g/10m in) | Mn/Mw/Mz | PDI | Mz/Mw | G' (Pa) | η* (Pa·s) | Melt strength (g) | Expansion ratio (times) |
|---|---|---|---|---|---|---|---|---|
| Example 1 | 1.7 | 53,100/ 190,000/ 2,420,000 | 3.58 | 12.7 | 3,070 | 10,652 | 3.3 | 7.9 |
| Example 2 | 1.4 | 55,600/ 210,000/ 5,500,000 | 3.86 | 26.2 | 4,146 | 13,150 | 4.2 | 6.9 |
| Compar ative Exampl e1 | 4.5 | 53,000/ 148,000/ 400,000 | 2.76 | 2.70 | 1,522 | 7,020 | 2.1 | 2.2 |
| Compar ative Exampl e2 | 4.2 | 61,000/ 171,000/ 618,000 | 2.7 | 3.6 | 1,632 | 7,345 | 2.3 | 2.7 |

Referring to Table 2 above, it was found that the biodegradable polyester resin compounds of Examples 1 and 2 had higher melt viscosity (η*) and expansion ratio than those of the biodegradable polyester resin compounds of Comparative Examples 1 and 2. In addition, it was found that the biodegradable polyester resin compounds of Examples 1 and 2 had higher storage modulus (G') and melt strength than those of the biodegradable polyester resin compounds of Comparative Examples 1 and 2.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the spirit and scope of the inventive concept as defined by the following claims.

## Claims

1. A biodegradable polyester resin compound obtained by melt-kneading a biodegradable polyester resin and a chain extender, wherein the chain extender comprises at least one compound selected from a polyepoxide compound having two or more epoxy groups and a polyisocyanate compound having three or more isocyanate groups.

2. The biodegradable polyester resin compound of claim 1, wherein the biodegradable polyester resin includes at least one polymer selected from the group consisting of polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate terephthalate (PBSAT), and polyethylene succinate-adipate-terephthalate (PESAT).

3. The biodegradable polyester resin compound of claim 1, wherein the biodegradable polyester resin has a number-average molecular weight Mn in a range of about 40,000 to about 50,000, a weight-average molecular weight Mw in a range of about 110,000 to about 180,000, and a Z-average molecular weight Mz in a range of about 400,000 to about 800,000.

4. The biodegradable polyester resin compound of claim 1, wherein the chain extender has a weight-average molecular weight Mw in a range of about 1,000 to about 10,000.

5. The biodegradable polyester resin compound of claim 1, wherein the polyepoxide compound comprises at least one compound selected from the group consisting of:

   diepoxide comprising a bisphenol A-type epoxy resin, a hydrogenated bisphenol A-type epoxy resin, a brominated bisphenol A-type epoxy resin, a bisphenol F-type epoxy resin, a bisphenol S-type epoxy resin, a bixylenol-type epoxy resin, a biphenol-type epoxy group, or a combination thereof;
   triepoxide comprising a novolac-type epoxy resin, a phenol novolac-type epoxy resin, a bixylenol-type epoxy resin, a cresol novolac-type epoxy resin, an N-glycidyl-type epoxy resin, a novolac-type epoxy resin of bisphenol A, a biphenol novolac-type epoxy resin, a chealate-type epoxy resin, a glyoxal-type epoxy resin, an amino group-containing epoxy resin, a rubber-modified epoxy resin, a dicyclopentadiene phenolic-type epoxy resin,

a tetrakisphenolethane-type epoxy resin, a diglycidyl phthalate resin, a heterocyclic epoxy resin, a tetraglycidylxylenoylethane resin, a silicone-modified epoxy resin, or a ε-caprolactone-modified epoxy resin, or a combination thereof;
a poly glycidyl (meth)acrylate oligomer; and
a poly glycidyl (meth)acrylate polymer.

**6.** The biodegradable polyester resin compound of claim 1, wherein the polyisocyanate compound comprises at least one compound selected from the group consisting of a trimer of alkylene diisocyanate, triphenylmethane triisocyanate, 1,3,5-benzene triisocyanate, 2,4,5-toluene triisocyanate, 1,3,6-hexamethylene triisocyanate, or a combination thereof.

**7.** The biodegradable polyester resin compound of claim 1, wherein the amount of the chain extender is in a range of about 0.1 parts by weight to about 0.4 parts by weight based on 100 parts by weight of the biodegradable polyester resin.

**8.** The biodegradable polyester resin compound of claim 1, wherein the biodegradable polyester resin compound further comprises at least one additive selected from the group consisting of foam nucleating agent, wax, and a thermal stabilizer.

**9.** The biodegradable polyester resin compound of claim 1, wherein the biodegradable polyester resin compound has a number-average molecular weight Mn in a range of about 50,000 to about 60,000, a weigh-average molecular weight Mw in a range of about 170,000 to about 220,000, and a Z-average molecular weight Mz in a range of about 2,000,000 to about 6,000,000.

**10.** The biodegradable polyester resin compound of claim 1, wherein the biodegradable polyester resin compound has melt viscosity in a range of about 8,000Pa·s to about 14,000Pa·s when measured according to Advanced Rheometric Expansion System (ARES) under conditions of a temperature of about 160°C, a strain of about 10%, and a frequency of about 0.1 Hz.

**11.** The biodegradable polyester resin compound of claim 1, wherein the biodegradable polyester resin compound has storage modulus in a range of about 2,500Pa to about 5,000 Pa when measured according to ARES under conditions of a temperature of about 160°C, a strain of about 10%, and a frequency of about 0.1 Hz.

**12.** The biodegradable polyester resin compound of claim 1, wherein the biodegradable polyester resin compound has melt strength in a range of about 3.0 g to about 7.0 g when measured using a melt strength meter.

**13.** The biodegradable polyester resin compound of claim 1, wherein the biodegradable polyester resin compound has expansion ratio in a range of about 5.0 times to about 10.0 times when performing an extrusion foaming process.

**14.** A foamed article obtained by using the biodegradable polyester resin compound of any one of claims 1 to 13.

INTERNATIONAL SEARCH REPORT

International application No. **PCT/KR2014/009721**

A. CLASSIFICATION OF SUBJECT MATTER

***C08L 67/00(2006.01)i, C08K 5/1515(2006.01)i, C08K 5/29(2006.01)i, C08L 63/00(2006.01)i, C08J 9/00(2006.01)i***

According to International Patent Classification (IPC) or to both national classification and IPC

B. FIELDS SEARCHED

Minimum documentation searched (classification system followed by classification symbols)

C08L 67/00; C08L 101/16; C08L 67/03; C08G 18/72; C08G 63/16; C08G 63/08; C08J 9/06; C08K 3/34; C08G 63/78; C08L 31/02; C08G 18/42; C08K 5/1515; C08K 5/29; C08L 63/00; C08J 9/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: polyester, chain extender, biodegradation, foam

C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2013-0027095 A (SAMSUNG FINE CHEMICALS CO.,LTD) 15 March 2013<br>See abstract; claims 1, 9, 10; paragraphs [0051], [0052], [0067], [0078], [0081]; and table 1. | 1-13<br>14 |
| Y | KR 10-2012-0076718 A (LG HAUSYS, LTD.) 10 July 2012<br>See abstract; and claims 1, 4, 6, 7. | 14 |
| A | KR 10-2012-0089889 A (SAMSUNG ELECTRONICS CO., LTD. et al.) 16 August 2012<br>See abstract; claims 1, 5; and paragraph [0046]. | 1-14 |
| A | KR 10-2009-0008899 A (JEONG, Ji Soo) 22 January 2009<br>See abstract; and claims 1-3, 5, 7, 18. | 1-14 |
| A | KR 10-0758221 B1 (MARINE TECH CO., LTD) 12 September 2007<br>See abstract; and claim 1. | 1-14 |
| A | KR 10-2012-0088616 A (S-ENPOL CO.,LTD. et al.) 08 August 2012<br>See abstract; and claims 1, 4. | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 JANUARY 2015 (14.01.2015) | **14 JANUARY 2015 (14.01.2015)** |
| Name and mailing address of the ISA/**KR**<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.
PCT/KR2014/009721

| Patent document cited in search report | Publication date | Patent family member | Publication date |
|---|---|---|---|
| KR 10-2013-0027095 A | 15/03/2013 | CN 103842403 A | 04/06/2014 |
| | | EP 2752438 A2 | 09/07/2014 |
| | | JP 2014-527568 A | 16/10/2014 |
| | | US 2014-0121332 A1 | 01/05/2014 |
| | | WO 2013-032140 A2 | 07/03/2013 |
| | | WO 2013-032140 A3 | 25/04/2013 |
| KR 10-2012-0076718 A | 10/07/2012 | CN 102582173 A | 18/07/2012 |
| | | EP 2658906 A2 | 06/11/2013 |
| | | JP 2014-501317 A | 20/01/2014 |
| | | US 2013-0266767 A1 | 10/10/2013 |
| | | WO 2012-091366 A2 | 05/07/2012 |
| | | WO 2012-091366 A3 | 18/10/2012 |
| KR 10-2012-0089889 A | 16/08/2012 | CN 102558790 A | 11/07/2012 |
| | | US 2012-0157607 A1 | 21/06/2012 |
| KR 10-2009-0008899 A | 22/01/2009 | NONE | |
| KR 10-0758221 B1 | 12/09/2007 | NONE | |
| KR 10-2012-0088616 A | 08/08/2012 | CN 103168058 A | 19/06/2013 |
| | | EP 2671899 A1 | 11/12/2013 |
| | | JP 2014-503676 A | 13/02/2014 |
| | | KR 10-1163924 B1 | 09/07/2012 |
| | | US 2013-0202223 A1 | 08/08/2013 |
| | | WO 2012-105730 A1 | 09/08/2012 |

Form PCT/ISA/210 (patent family annex) (July 2009)